# EUROPEAN PATENT APPLICATION

(11) **EP 1 378 840 A1**
(43) Date of publication of application: **07.01.2004**
(21) Application number: 02714453.4
(22) Date of filing: 04.04.2002
(51) Int. Cl.: G06F 17/30, G06F 12/00, G06F 13/00

(54) **STRUCTURED DOCUMENT DISTRIBUTION DEVICE AND STRUCTURED DOCUMENT DISTRIBUTION SYSTEM**

(30) Priority: 12.04.2001 JP 2001113698; 29.03.2002 JP 2002096360
(71) Applicant: Matsushita Electric Industrial Co., Ltd., Kadoma-shi, Osaka 571-8501 (JP)
(72) Inventor: TAKEUCHI, Shunichi, Yokohama-shi Kanagawa 223-0053 (JP); TADA, Hiroyuki, Kawasaki-shi, Kanagawa 214-0022 (JP)
(74) Representative: Grünecker, Kinkeldey, Stockmair & Schwanhäusser Anwaltssozietät
(86) International application number: PCT/JP2002/003373
(87) International publication number: WO 2002/084525

(57) **Abstract**

The present invention comprises a data receiver 113 that receives a request for a structural document from a terminal apparatus, a document divider 114 that divides a structural document read out from a document memory 111 in response to the data request into a page abstract 88 that shows a summary and divisional document data, and a divisional document transmitter 116 that delivers the page abstract 88 or the divisional document, configured such that the web document is division-communicated and then converted into a web document that is usable on the terminal side, and redundancy upon communication of structural documents is thus reduced through use of conversion.

## Description

### Technical Field

The present invention relates to a structural document delivery apparatus and structural document delivery system that deliver structural documents through a computer network.

### Background Art

In recent years, access demand from small-sized terminals such as mobile terminals connected to low-speed links of several Kbps has increased.

Normally, web documents are described for PCs (personal computers) connected to high-speed networks of several dozen Kbps to several Mbps . However, mobile terminals have small processing capacity as well as small display screens. Based on this, web documents contain descriptions that are not suitable for use for mobile terminals, for such descriptions are too lengthy for mobile terminals. In addition, web documents are typically described in HTML (Hyper Text Markup Language) or the like.

In view of these circumstances, conversion communication methods that reduce redundancy of original web documents have been proposed. These are techniques whereby web documents can be used without difficulty by mobile terminals connected to low-speed links such as wireless links. According to these conversion communication methods, terminal capacity, the capacity of a network the terminal is connected to, and user preference are taken into parameters, and based on these parameters, original web documents are converted into adequate forms for communication. Hereinafter, the above group of parameters will be referred to as conversion configurations.

In addition, the data volume that a mobile terminal is capable of communicating is limited. Therefore original web document is often divided into several divisional web documents. When several divisional web documents are thus generated, navigation of these divisional web documents is realized by establishing links between these divisional web documents.

Examples of a conversion communication system adopting such methods are given in Japanese Unexamined Patent Application Publication No.2000-9001 and in Japanese Unexamined Patent Application Publication No.2000-76473.

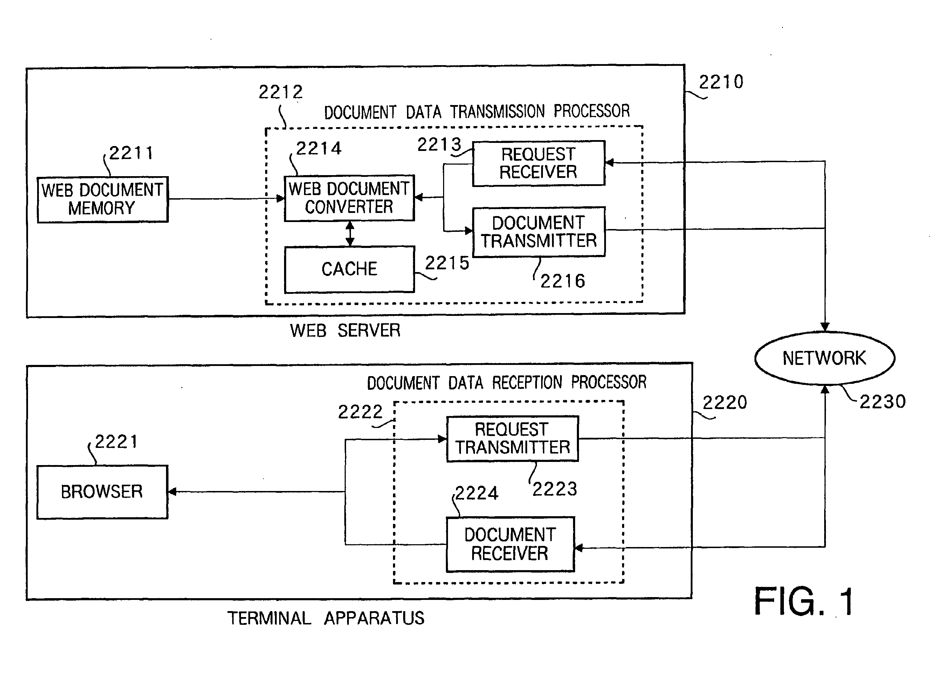

FIG.1 shows a configuration of a conventional conversion communication system. In FIG.1, web server 2210 and terminal apparatus 2220 are connected through network 2230.

In response to a web document delivery request sent from terminal apparatus 2220, web server 2210 converts (divides) and delivers an original web document. Web server 2210 comprises web document memory 2211 that stores original web documents, and document data transmission processor 2212. Document data transmission processor 2212 comprises request receiver 2213 that receives a web page delivery request sent from terminal apparatus 2220, web document converter 2214, cache 2215 used as a temporary memory when web document converter 2214 performs processing, and document transmitter 2216 that transmits divided documents.

Web document converter 2214 converts the web document using conversion configurations in which transmission performance of the wireless link, the terminal display size, the description language used by browser 2221, and user preference are the parameters.

In addition, terminal apparatus 2220 is connected to network 2230 through low-speed links such as wireless links. Assume this terminal apparatus 2220 is, for instance, a mobile terminal with a small-sized (resolution below (800*600(pix)) display. Terminal apparatus 2220 comprises browser 2221 and document data reception processor 2222. Document data reception processor 2222 comprises request transmitter 2223 that transmits web document requests and document receiver 2224 that receives divided documents.

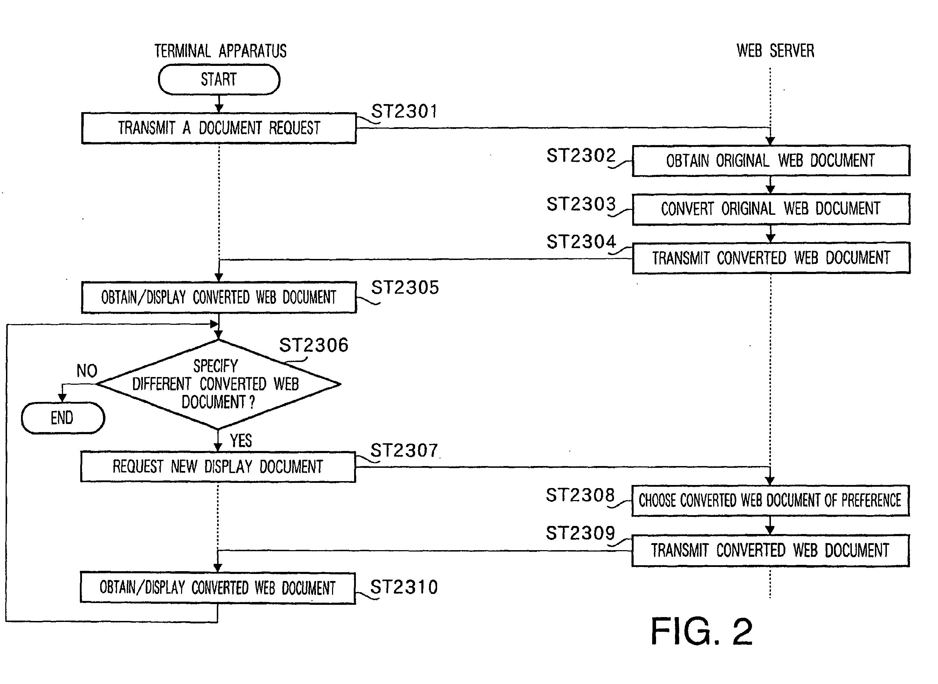

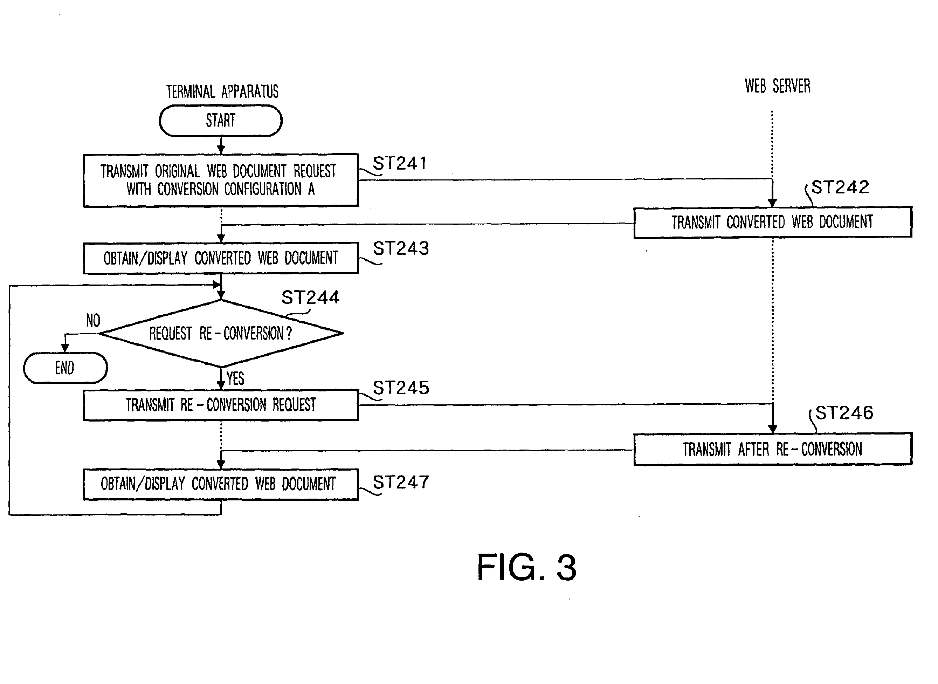

The operation of a conversion communication system configured such as above will be described below. First, the divisional display operation where the initial request for an original web document is processed will be described below with reference to FIG.2. Thereafter, the re-conversion display operation where after terminal apparatus 2220 displays a divided web document once and then displays it again after re-converting it will be described with reference to FIG.3.

Finally, the divisional display operation will be explained. These examples assume cases where web document converter 2214 maintains the conversion configurations.

First, browser 2221 of terminal apparatus 2220 makes a request to web server 2210 to deliver an original web document (Step ST 2301). The request for a web document is performed through request transmitter 2223. In addition, this request is realized by specifying an original URL (Uniform Resource Locator). In such case, HTTP (Hyper Text Transport Protocol) is employed as the transmission protocol for the web document delivery request to web server 2210.

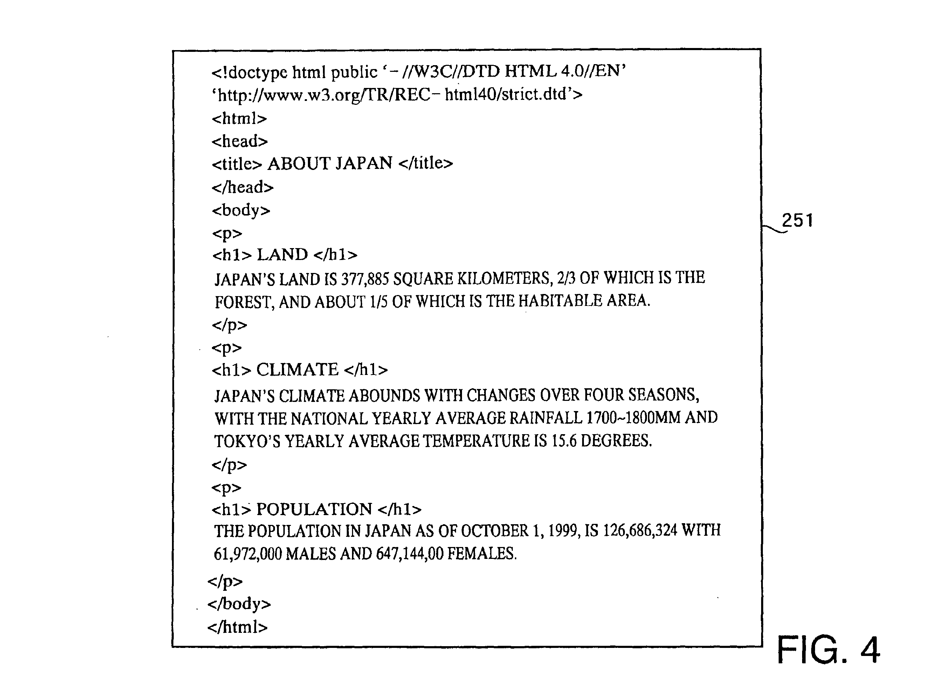

Correspondingly, web document converter 2214 of web server 2210 receives this web document delivery request through request receiver 2213 and picks the original web document indicated by the URL in the request from original web document memory 2211 (Step ST 2302). FIG.4 is an example of original web document 251.

Using conversion configurations that terminal apparatus 2220 is compatible with, web document converter 2214 performs conversion (division) (Step ST 2303). A case will be described in this example where web document converter 2214 maintains the conversion configurations. Despite the above, terminal apparatus 2220 can transmit the conversion configurations as attribute data. For instance, CC/PP (Composite Capabilities/Preference Profiles) is a well known scheme of such conversion configuration management. CC/PP is available from "http://www.w3.org/Mobile/CCPP/".

In addition, there are cases where an original web document is division-converted into several web documents as a result of conversion. In such case, from among the group of division-converted web documents, a page equivalent to the top page will be transmitted first from web server 2210 to terminal apparatus 222 0 . The other, remaining web documents are cached in cache 2215. Navigation of these converted web documents is realized by linking one another. If a converted web document that terminal apparatus 2220 requests is in cache 2215, web document converter 2214 reads out the converted web document from cache 2215 and transmits the read-out converted document to terminal apparatus 2220.

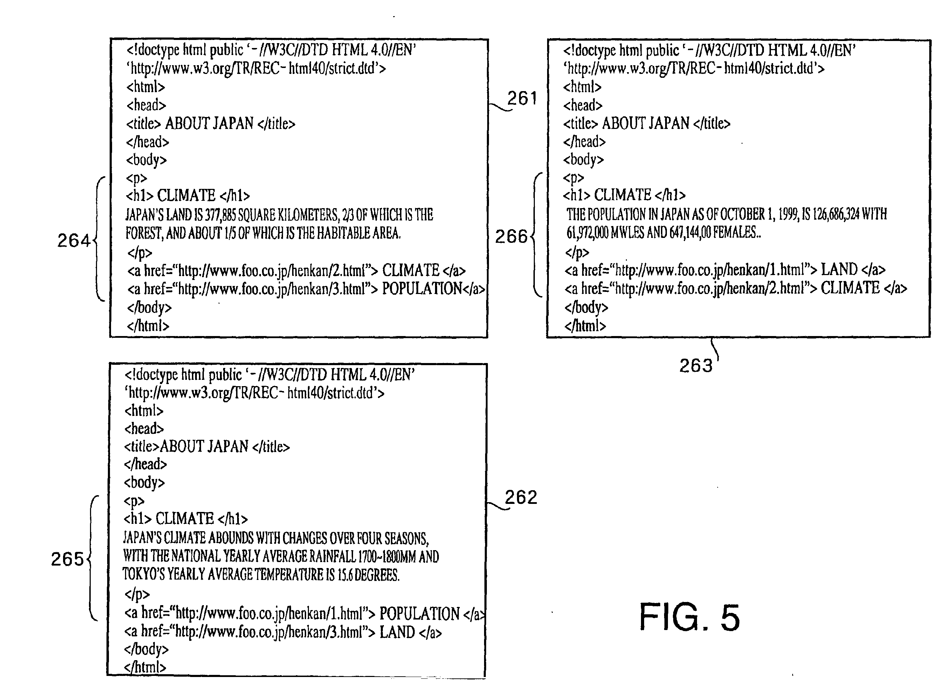

FIG.5 shows a number of web documents 261-263 generated as a result of conversion of the original web document shown in FIG.4.

Next, web document converter 2214 transmits the converted web document to terminal apparatus 2220 through document transmitter 2216 (Step ST 2304).

Correspondingly, terminal apparatus receives the converted web document through document receiver 2224. Then, browser 2221 displays this converted web document on a display (Step ST 2305).

Next, the user is able to request for a display of other division-converted web documents by selecting links in the web document displayed on browser 2221 (Step ST 2306). When such request is made, terminal apparatus 2220 transmits the request to the server (Step ST 2307).

Correspondingly, web server 2210 receives the request, and web document converter 2214 reads out the requested web document from cache 2215 (Step ST 2308), which is then transmitted to terminal apparatus 2220 through document transmitter 2216 (Step ST 2309).

Finally, terminal apparatus 2220 receives the converted web document through document receiver 2224, and browser 2221 presents this converted web document on a display (Step ST 2310).

The operation of re-conversion display will be explained next. With the following example, a case will be described where terminal apparatus 2220 makes a data request attached by conversion configurations.

First, terminal apparatus 2220 transmits a delivery request for an original web document the user specified through browser 2221 (Step ST 241). This request is made through transmitter 2223. In addition, this request is realized by specifying an original URL (Uniform Resource Locator) and modification configuration parameter set A. The present example will be described based on the assumption that the conversion configuration parameter set A includes parameters that specify as to "No horizontal scrolling."

Correspondingly, web server 2210 receives this request, and using the conversion configuration parameter set A, converts the original web document and transmits the converted web documents which are output results (Step ST 242). These processings in step ST 242 are the same as the processings in step ST 2302 and in step ST 2304 in the divisional display operation shown in FIG.2.

Correspondingly, terminal apparatus 2220 receives the converted web document through document receiver 2224. Then, browser 2221 presents the converted web document on a display (Step ST 243).

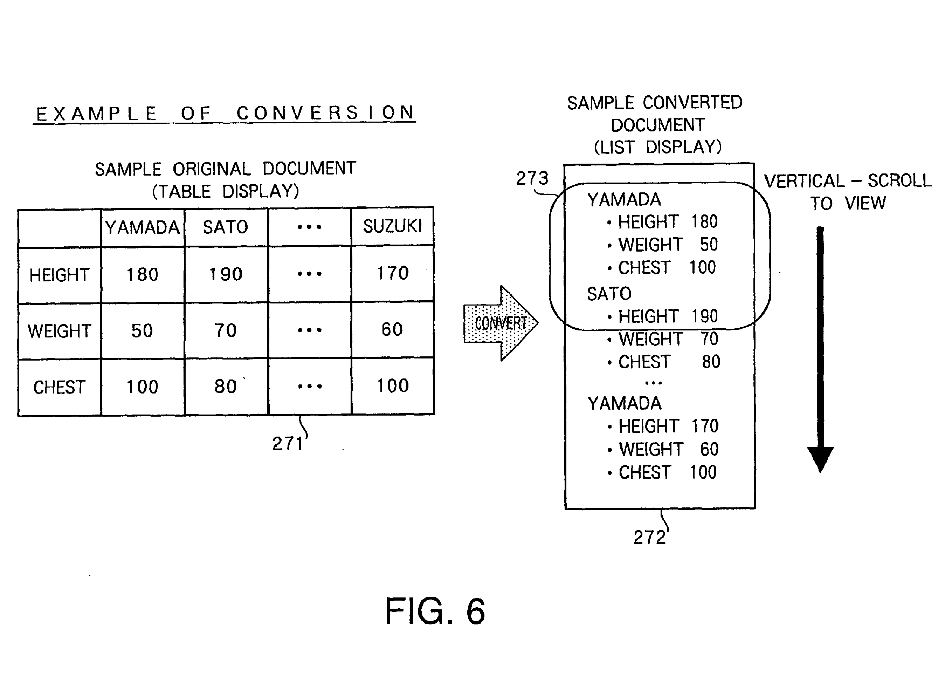

FIG.6 is an example of conventional conversion. In FIG.6, the figure shown as 271 is an example of an original web document described in an unconverted table form. Moreover, the figure shown as 272 is a display example, which is converted in such a way as to disallow horizontal scrolling based on conversion configurations. In this example, it is converted into a list display form. Moreover, the figure shown as 273 conceptually shows the display range size that can be displayed on a terminal display at a time. The other part than the display area can be displayed by vertical scrolling.

Next, for example, when the user judges that the above display form is not suitable for comparison of height, the user is able to make a request for allowance of horizontal scrolling of the document (Step ST 244). In this case, the request is attached by a conversion configuration parameter set B including specifying "Allow horizontal scrolling" (Step ST 245). Incidentally, this reconversion request is realized such as by selecting a link provided in the web document in advance.

Next, web server 2210 receives this request and, using the conversion configuration parameter set B, performs a conversion of the original web document and transmits the converted web document (Step ST 246) . These processings in this step ST 246 are the same as the processings in step ST 2302 and in step ST 2304.

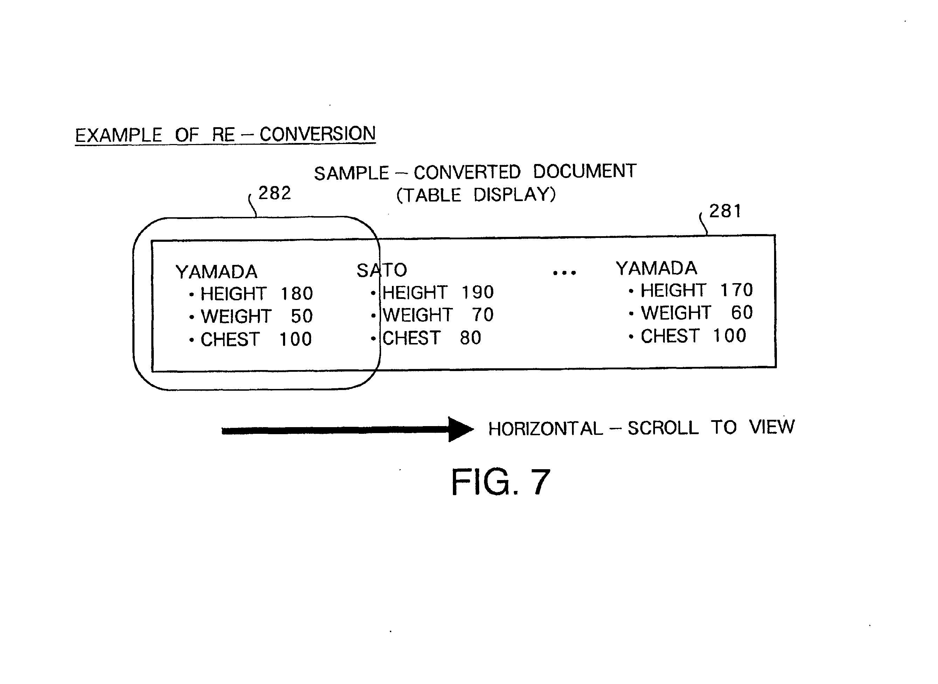

Finally, terminal apparatus 2220 receives and displays the converted web document, which has identical content with the converted web document obtained in step ST 243 and which is re-converted into a table form so as to allow horizontal scrolling (Step ST 247). FIG.7 shows a display example as a result of re-conversion. In FIG.7, the figure shown as 281 is a display example as a result of conversion so as to allow horizontal scrolling, and the figure shown as 282 shows the range size that a terminal can display at a time. The other part than the display range can be displayed by horizontal scrolling.

Cases were described with the above examples where web document converter 2214 that performs web document conversion processing is provided in a web server. However, even if this web document converter 2214 is provided in a network relay apparatus such as a proxy server, conversion communication such as described above is still possible.

However, even with the above-described conversion communication system, the problem persists that converted web documents that will be communicated cannot reduce redundancy that occurs between their documents. A group of converted web documents sharing a common original web document show a great amount of similarity, that is, redundancy. Such redundancy occurs when continuously viewing converted web documents or when re-converting an original web document and viewing them. A case will be described in detail here where communication of web documents becomes redundant.

First, an original web document is separated into a number of converted web documents as a result of conversion of the original web document, and these converted web documents are continuously viewed, that is to say, when step ST 2306 through 2310 in FIG.2 are repeated, communicated information becomes redundant based on the following reason.

Converted web documents generated as a result of division of an original web document by web document converter 2214 have the same, overlapping "tags" and "elemental contents" in their documents. These overlapping parts become redundant information in communication.

For example, with regard to converted web documents 261-263 shown in FIG.5, these converted web documents 261-263 are all identical except in parts shown as 264, 265, and 266, which makes redundant information.

In addition, when an original web document is viewed by way of re-conversion, information that is communicated becomes redundant based on the following reason.

In the case of reconversion processing in the above-described reconversion display operation, converted web documents transmitted after reconversion differ from one another in their tags that specify the list form or table form; nevertheless, the "elemental contents" overlap. In other words, a web document is virtually the same before and after reconversion; however, since the whole document is retransmitted, redundancy becomes great.

As described above, when a structural document is converted for use by conventional techniques, the problem of redundancy occurs upon communication of converted structural documents.

In the above, examples were described with reference to web pages and their problems; nevertheless, it can be assumed without difficulty that similar problems arise in communication of other structural documents such as SGML and XML.

### Summary of the invention

The present invention aims to reduce redundancy that occurs upon communication of converted structural documents to perform efficient structural document delivery.

The present invention is configured such that when a structural document delivery apparatus receives a request for a delivery of a structural document from a terminal apparatus, a page abstract is made that shows a summary of the requested document by combination of content data which are elements contained in the requested structural document and that is transmitted to the terminal apparatus, and next, the terminal apparatus requests the structural document delivery apparatus for needed content data selected with reference to the above page abstract, and the structural document delivery apparatus extracts from the structural document the content data specified by the request and transmits the extracted data to the terminal apparatus.

According to the above, upon communication of converted structural documents, it is possible to deliver only content data that is minimum information needed to display the converted document. As a result of this, it is possible to realize reduction of redundancy in communication when structural documents are converted for use.

### Brief Description of Drawings

FIG.1 is a block diagram showing a configuration of a conventional conversion communication system;
FIG.2 is a flowchart illustrating an operation of divisional display operation by a conventional conversion communication system;
FIG.3 is a flowchart illustrating an operation of reconversion display operation by a conventional conversion communication system;
FIG.4 shows a description example of a web page;
FIG.5 shows description examples of a division-modified web page;
FIG.6 shows a conversion example of a web page;
FIG.7 shows a conversion example of a web page;
FIG.8 is a block diagram showing a configuration of a web document delivery system according to Embodiment 1 of the present invention;
FIG.9 is a flowchart showing an operation of a web document delivery system according to Embodiment 1 of the present invention;
FIG.10 is a flowchart showing an operation of a page abstract delivery processing by a web document delivery system according to Embodiment 1 of the present invention;
FIG.11 is a flowchart showing an operation of a delivery processing for the top divisional document page by a web document delivery system according to Embodiment 1 of the present invention;
FIG.12 is a flowchart showing an operation of a delivery processing for a requested divisional document page by a web document delivery system according to Embodiment 1;
FIG.13 shows examples of divisional document images according to Embodiment 1;
FIG.14 is a diagram showing a sample configuration of a page abstract and divisional document data according to Embodiment 1;
FIG.15 is a diagram showing examples of data of page abstract and divisional document data according to Embodiment 1;
FIG.16 shows a diagram illustrating an example of a tree-structure presentation of the page abstract according to Embodiment 1;
FIG.17 is a diagram showing an example of tree-structure data updated on a terminal apparatus side according to Embodiment 1;
FIG.18 is a diagram showing an example of the first page of divided web documents according to Embodiment 1;
FIG.19 is a diagram where the web document shown in FIG.18 is displayed;
FIG.20 is a diagram showing an example of tree-structure data updated on a terminal apparatus side according to Embodiment 1;
FIG.21 is a diagram showing an example of a second page of divided web documents according to Embodiment 1;
FIG.22 is a flowchart illustrating the operation in reconversion display by a web document delivery system according to Embodiment 1;
FIG.23 is an example of a divided web document according to Embodiment 1;
FIG.24 shows diagrams illustrating examples of divisional document images according to Embodiment 1;
FIG.25 is a diagram illustrating an example of the first page of divided web documents according to Embodiment 1;
FIG.26 is a block diagram showing a configuration of a web document delivery system according to Embodiment 2 of the present invention;
FIG.27 is a flowchart showing a divisional display operation by a web document delivery system according to Embodiment 2;
FIG.28 is a flowchart showing an operation of a delivery processing for requested divisional document pages by a web document delivery system according to Embodiment 2; and
FIG.29 is a flowchart illustrating an operation in reconversion display by a web document delivery system according to Embodiment 2.

### Best Mode for Carrying Out the Invention

With reference to the accompanying drawings now, embodiments of the present invention will be described below.

According to the present embodiment, the term "data request" refers to a request that is transmitted to a server as the first network apparatus from a terminal apparatus as a second network apparatus and that is used to specify partial information (content data) in the original structural document that the terminal apparatus needs.

Moreover, the term "divisional document data" refers to data as a result of division and extraction of an original structural document based on the above data request.

In the present specification, a "structural document" is an electronic document that is described in a structural description language such as SGML (Standard Generalized Markup Language) and XML (extensible Markup Language). An HTML document described in a language for web page description such as HTML (HyperText Markup Language) is also within the range of this "structural document." Furthermore, examples that are equivalent to the above HTML document include the HTML document for i-mode, compact-HTML document, and WML (wireless Markup Language) document, and the present invention is applicable to these documents.

Moreover, according to the present embodiment, "elemental content" refers to parts between tags in structural documents, excluding the tags.

### (Embodiment 1)

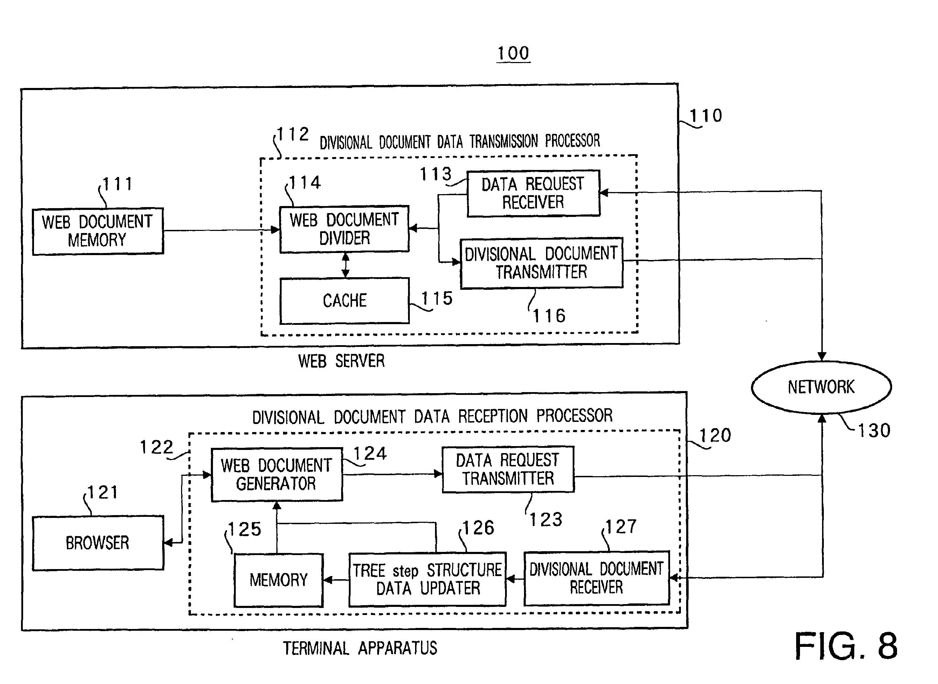

FIG. 8 shows a configuration diagram of a web document delivery system according to Embodiment 1 of the present invention.

Web document delivery system 100 according to Embodiment 1 employs a configuration where web server 110, which is a web document delivery apparatus, and terminal apparatus 120 are connected via network 130.

Web server 110 is connected to network 130 and comprises web document memory 111 and divisional document data transmission processor 112.

In divisional document data transmission processor 112, data request receiver 113 is provided that receives a data request from terminal apparatus 120. In addition, data request receiver 113 outputs the received data request to web document divider 114 provided in divisional document data transmission processor 112.

Web document divider 114 reads out from web document memory 111 the web document specified by the data request and makes divisional document data composed of a page abstract that shows a summary of the web document and elemental contents of the page abstract.

In addition, in divisional document data transmission processor 112, cache115 is provided that is used as a temporary memory space when web document divider 114 performs data processing.

Moreover, in divisional document data transmission processor 112, divisional document transmitter 116 is provided that transmits the page abstract and divisional document data to terminal apparatus 120.

Terminal apparatus 120 is connected to network 130 and composed of browser 121 and divisional document data reception processor 122.

In divisional document data reception processor 122, web document generator 124 is provided that makes judgments as to the propriety of web document generation performed with relation to tree-structure data held in memory 125 by using the page abstract, requests missing data, and generates web documents. Moreover, web document generator 124 sends a web document delivery request and data request to data request transmitter 123.

In addition, data request transmitter 123 transmits the web document delivery request and data request output from web document generator 124 to web server 110.

In addition, in divisional document data reception processor 122, divisional document receiver 127 is provided that receives the page abstract and divisional document data. Divisional document data reception processor 122 sends the divisional document data and page abstract to tree-structure data updater 126.

In addition, tree-structure data updater 126 converts the received page abstract into tree-structure data and stores the data in memory 125. Moreover, tree-structure data updater 126 correlates the received divisional document data with the page abstract held in memory 125 and store them.

The operation by a web document delivery system configured such as above will be described below. Description will be given separately for the divisional display operation and the re-conversion display operation.

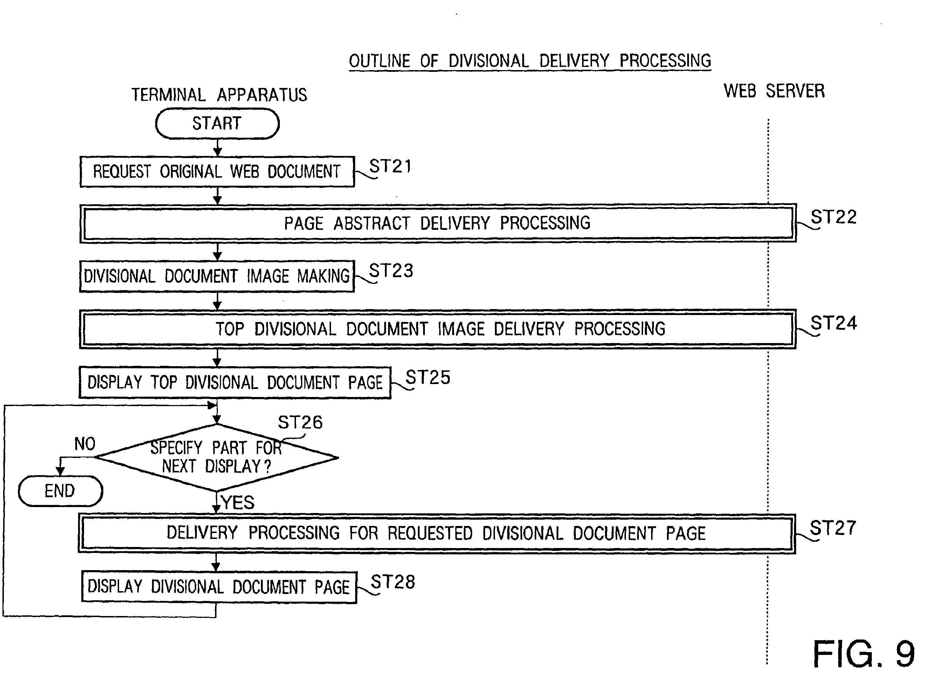

First, the divisional display operation by a web document delivery system will be described. The present embodiment will be described with reference to a structural document delivery system block diagram (FIG.8) and flowcharts (FIG.9-FIG.12).

First, browser 121 of terminal apparatus 120 requests makes a request for a delivery of an original web document to web server 110 through data transmitter 123 (Step ST 21). This request is realized by way of specifying a URL. Next, web server 110 delivers a page abstract of the requested original web document to terminal apparatus 120 (Step ST 22) .

A page abstract is an HTML-format description that shows a summary of an original web document by combination of "elemental contents." Moreover, instead of "elemental contents," a page abstract has id's which are identifiers corresponding to "elemental contents" and data that shows the number of characters and image size in the "elemental contents." The detailed procedures in this step ST 22 will be described later.

Next, web document generator 124 of terminal apparatus 120 makes divisional document images in order to realize a display that is adequate in relation with terminal capacity and user preference (Step ST 23).

A divisional document image is an HTML format description obtained as a result of division-processing a page abstract by extracting from the page abstract an id that corresponds to a desired "elemental content." Generated from a page abstract, each divisional document image has an id corresponding to an "elemental content" but carries no "elemental content." If then "elemental contents" that correspond to respective divisional document images are acquired, displayable HTML descriptions can be generated.

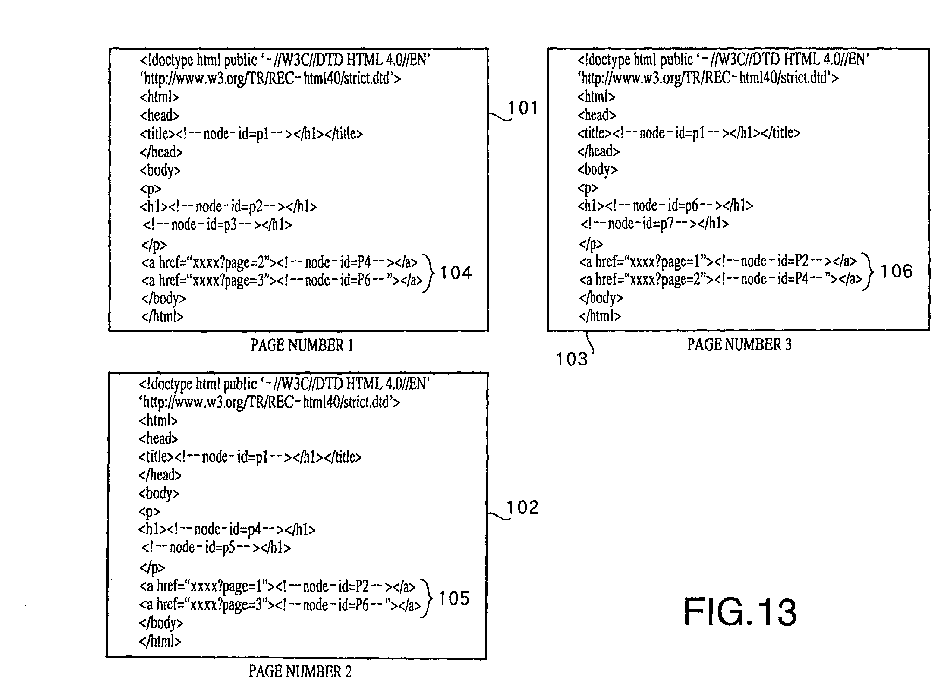

Web document generator 124 modifies a web document using conversion configurations where the parameters are based on transmission performance of wireless links and such, terminal display size, the description language used by browser 121, and user preference . In addition, with the present embodiment, id's set in a page abstract will be used as node id's as they are. FIG.13 shows examples of a document image.

In the examples of FIG.13, three generated document images 101-103 each carry a page number 1-3. Incidentally, the page number is used as a parameter of links between web documents generated from each document image. In web document generator 124 implemented on computers, each document image can be stored in a character-string sequence that has arguments corresponding to the page number.

Next, web document generator 124 of terminal apparatus 120 generates a data request to specify "elemental contents," which are data necessary to display the top page that results after the division processing. Then, data request transmitter 123 transmits the data request to web server 110.

Correspondingly, web server 110 transmits divisional document data, which is combination of "elemental contents" that correspond to the data request from terminal apparatus 120.

Terminal apparatus 120 receives the divisional document data which is combination of "elemental contents" delivered from web server 110 by divisional document receiver 127. Next, tree-structure data updater 126 uses the received divisional document data and updates the contents in memory 125. Then, web document generator 124 makes a web document of the top page that is to be displayed by using the content in memory 125 updated by tree-structure data updater 126 (Step ST 24). The detailed procedures of this step ST 24 will be described later.

Then, browser 121 of terminal apparatus 120 displays the generated web document on a display (Step ST 25).

When terminal apparatus 120 receives a request for displaying another divisional document specified by the user by selection of a link in the displayed web document on browser 121 (Step ST 26), with the request for displaying another divisional document, terminal apparatus 120 requests web server 110 for the data necessary to display the requested page. Then, terminal apparatus 120 receives the necessary data from web server 110 and makes web documents for displaying the requested page ( Step ST 27). The detailed procedures of this step ST 27 will be described later.

Then, browser 121 of terminal apparatus 120 displays the generated web document on a display (Step ST 28).

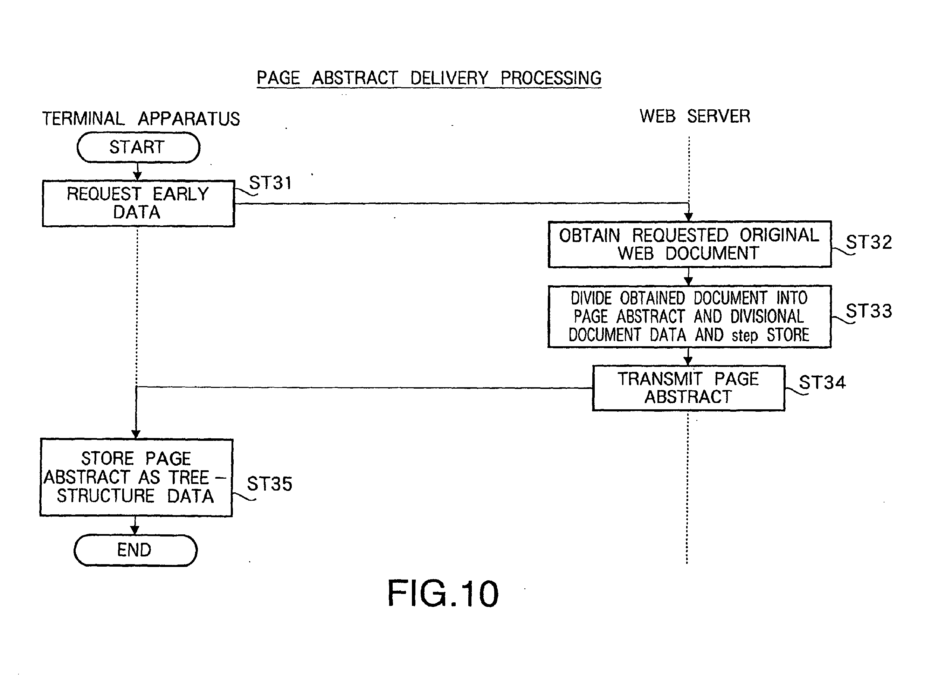

Next, the "page abstract delivery processing" described in step ST 22 will be described in detail with reference to FIG.10.

First, upon receiving a request from browser 121, web document generator 124 confirms that tree-structure data that relates to the specified URL is not in memory 125 and makes a request to web server 110 to transmit a page abstract corresponding to the specified URL, which is early data (Step ST 31).

Correspondingly, web document divider 114 of web server 110 receives a request for a transmission of this page abstract through data request receiver 113. Then, web document divider 114 picks from web document memory 111 the original web document indicated by the URL shown in the request (Step ST 32). In the description of the present embodiment, the document shown in FIG.4 is used as the example of original web document.

Next, web document divider 114 divides the obtained original web document into a page abstract and divisional document data, and stores each in cache 115 (Step ST 33). Although the description of the present embodiment employs cache 115, the processing is still possible without this cache 115.

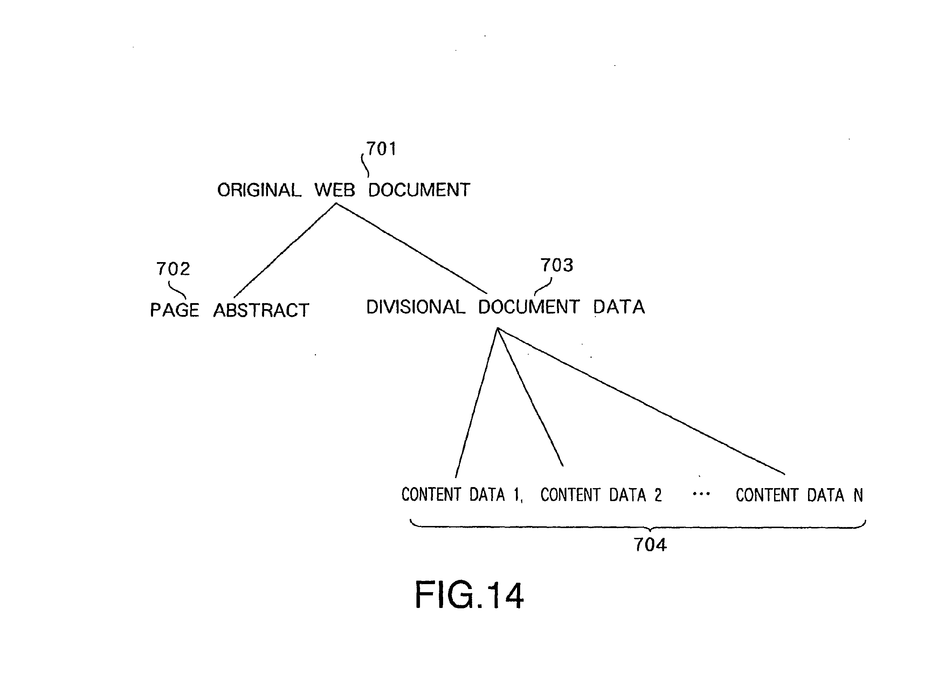

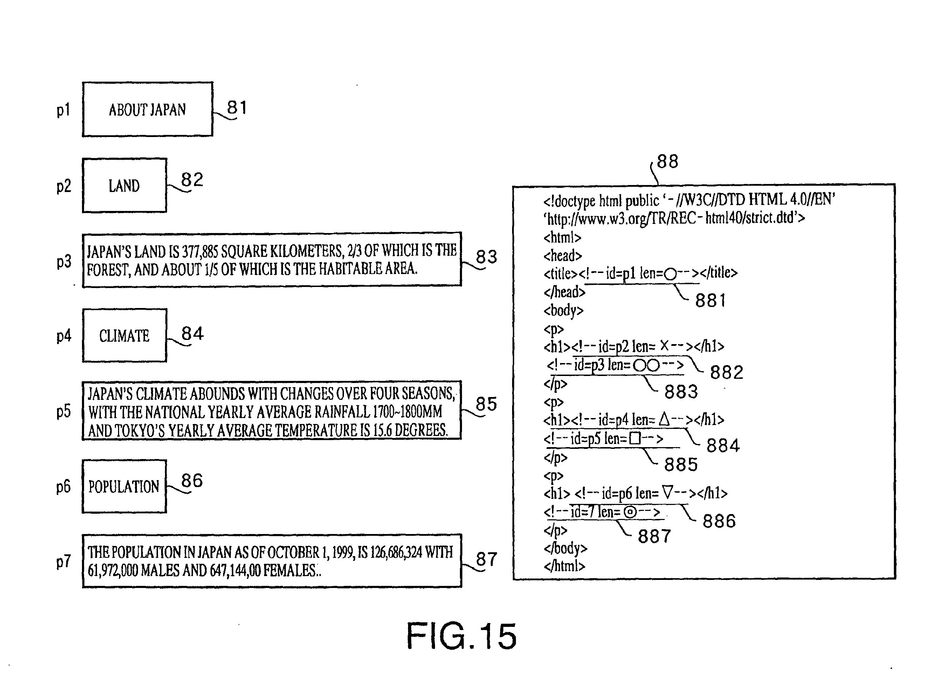

As shown in FIG.14, original web document 701 is divided into divisional document data 703 composed of a number of content data 704 and one page abstract 702. Content data 704 corresponds to each of "elemental contents" in a structural document. Page abstract 702 shows the structure of a whole document. FIG.15 shows examples of a page abstract and divisional document data generated through division of the original web document in FIG.4.

In FIG.15, 81 to 87 indicate content data which are "elemental contents," and 88 indicates a page abstract. Moreover, content data 81-87 have id's p1-p7, respectively. Meanwhile, by having id's that indicate content data 81-87, page abstract 88 represents a document structure equivalent to the original web document. In the examples in FIG.15, page abstract 88 has id's corresponding to content data 81-87 in parts shown as 881-887, and thus represents the document structure of the original web document. In addition, page abstract 88 has len' s that indicates the data volume of content data 81-87 in the parts shown as 881-887 in correspondence with the id's.

Thus, by having id's that correspond to content data 81-87, page abstract 88 is capable of displaying a summary of the document structure of the original web document without actually having content data 81-87.

Next, web document divider 114 transmits page abstract 88 to terminal apparatus 120 through divisional document transmitter 116 (Step ST 34).

Correspondingly, tree-structure data updater 126 of terminal apparatus 120 receives page abstract 88 through divisional document receiver 127. Tree-structure data updater 126 converts received page abstract 88 into tree-structure data and stores it in memory 125 to conclude the processing (Step ST 35).

Then, after the processing of step ST 35 is finished, tree-structure data updater 126 outputs an instruction to start processing to web document generator 124.

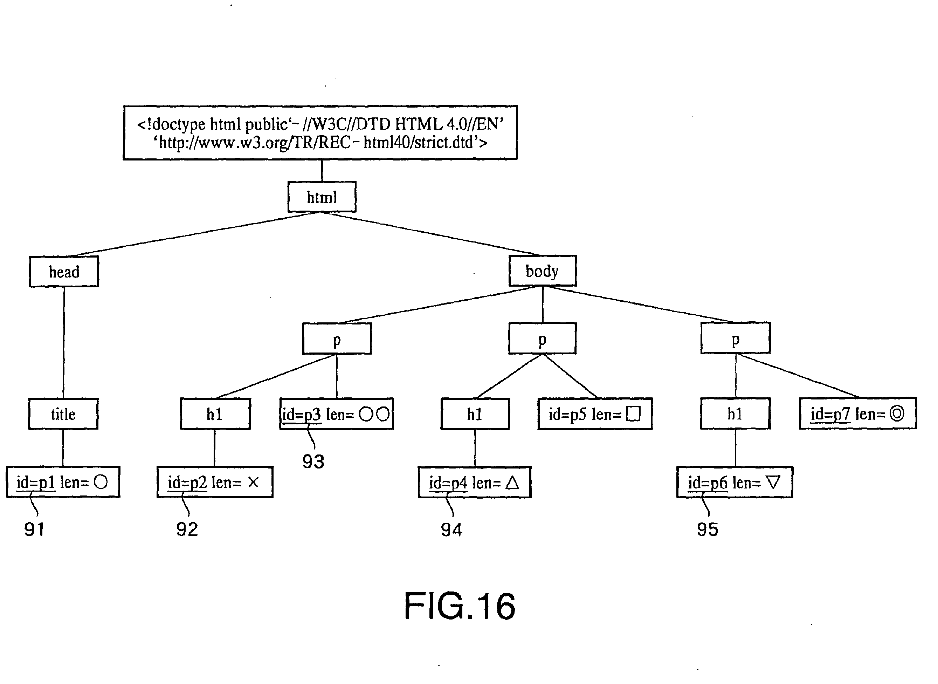

FIG.16 shows an example of tree-structure data made by tree-structure data updater 126 . FIG.16 is an example where page abstract 88 shown in FIG.15 is formed into a tree-structure, and the parent-child relationships between respective elements shown in FIG.15 are put into a tree-structure. Normally, a web document is stored in a computer memory in a structure that makes data processing easy such as the above tree-structure.

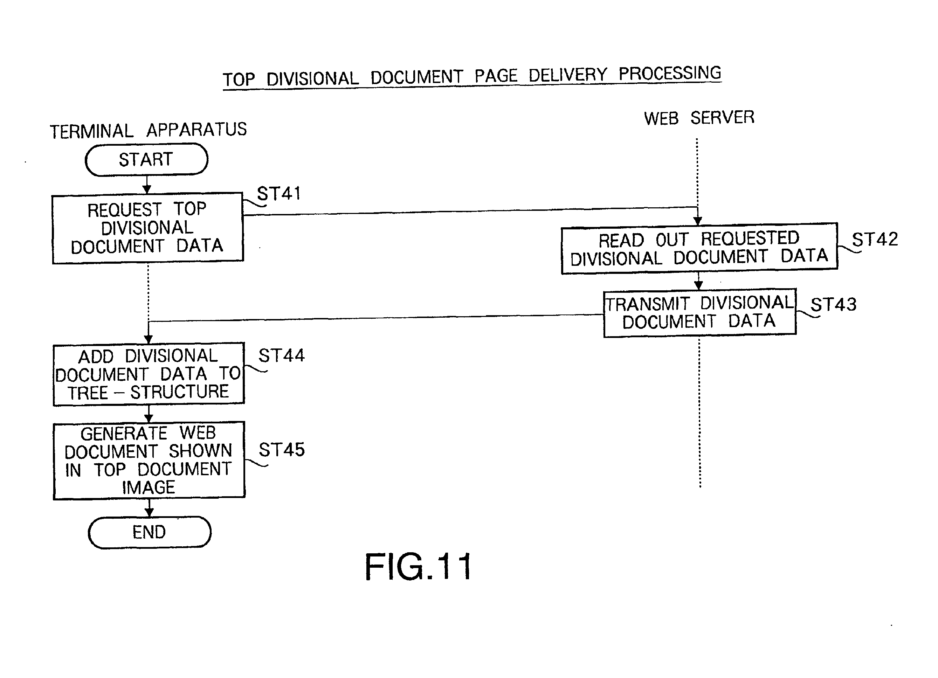

Next, the "delivery processing of the top divisional document page" described in step ST 24 will be described in detail with reference to FIG.11.

Web document generator 124 of terminal apparatus 120 performs the following processing upon the document image of page number 1 that corresponds to the top page output first to browser 121.

First, web document generator 124 accesses memory 125 and accesses tree-structure data that corresponds to the node id' s in the (top) document image o f page number 1. Then, web document generator 124 makes a request to web server 110 for content data that corresponds to the id' s in the document image of page number 1 (Step ST 41). As thus described, web document generator 124 requests data needed to display the top page document image by way of requesting content data included in the top page document image, which are "elemental contents," to web server 110.

With the present embodiment, the document image of page number 1 is document image 101 shown in FIG.13. Document images 101-103 shown in FIG.13 are examples of a document image where page abstract 88 shown in FIG.15 is divided for mobile terminals with a small display screen.

As obvious from the figure, the elements contained in page abstract 88 are divided into document images 101-103 that correspond to page numbers 1-3 and are stored in memory 125. In addition, in divided document images 101-103, links 104-106 to different document images 101-103 are added as the last element. This makes it possible to move among divisional document images 101-103.

In step ST 41, in order to display document image 101 of the first page, web document generator 124 of terminal apparatus 120 requests web server 110 for content data that corresponds to the five id's, namely p1 (91 in FIG.16), p2 (92), p3 (93), p4 (94), and p6 (95) that are contained in document image 101. In addition, page abstract 88 holds node data volumes (len) with node id's, whereby, in step ST 41, specification of content data is made clearer as a request is made by specifying a node id with the data volume (len).

Correspondingly, web document divider 114 of web server 110 reads out from cache 115 divisional document data having the requested id's (p1-p4, p6) (Step ST 42), which are then transmitted to terminal apparatus 120 through divisional document transmitter (step ST 43). In this example, web document divider 114 transmits content data 81-84, and 86 shown in FIG.15 that correspond to the id's (p1-p4, p6).

Correspondingly, tree-structure data updater 126 of terminal apparatus 120 receives content data 81-84, and 86 through divisional document receiver 127. Then, tree-structure data updater 126 adds the content data to the tree-structure data of page abstract 88 in memory 125 (Step ST 44).

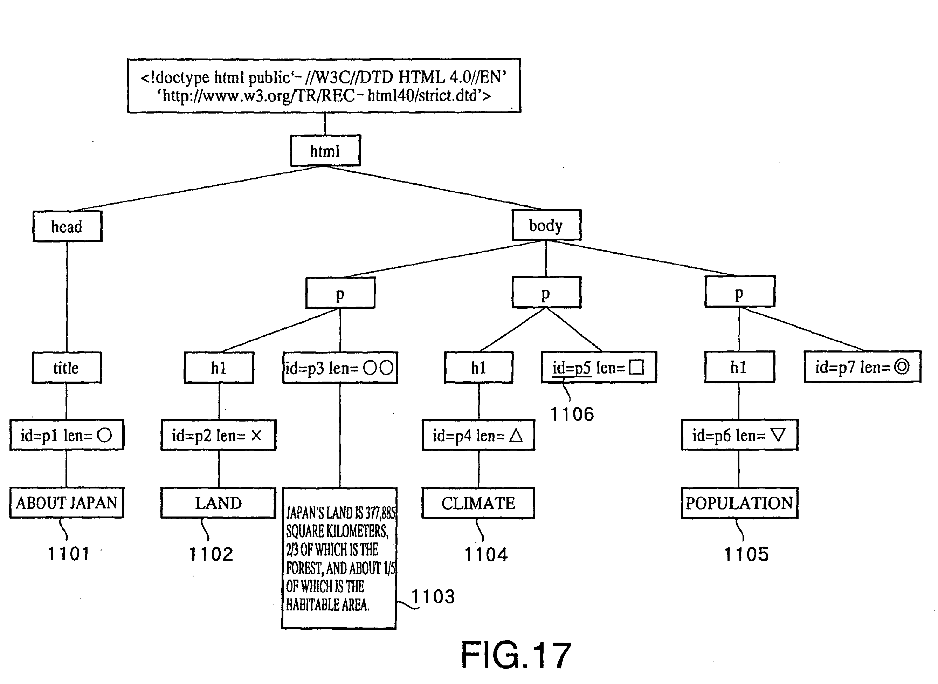

FIG.17 shows an example of tree-structure data updated in step ST 44. FIG.17 shows the tree-structure data of the page abstract shown in FIG.16, to which the divisional document data that terminal apparatus 120 acquired in step ST 44 (content data 81-84, and 86 shown in FIG.15) are added.

Next, using the updated tree-structure data shown in FIG.17, web document generator 124 generates the web document shown in document image 101 of specified page number 1 (Step ST 45) to conclude the processing.

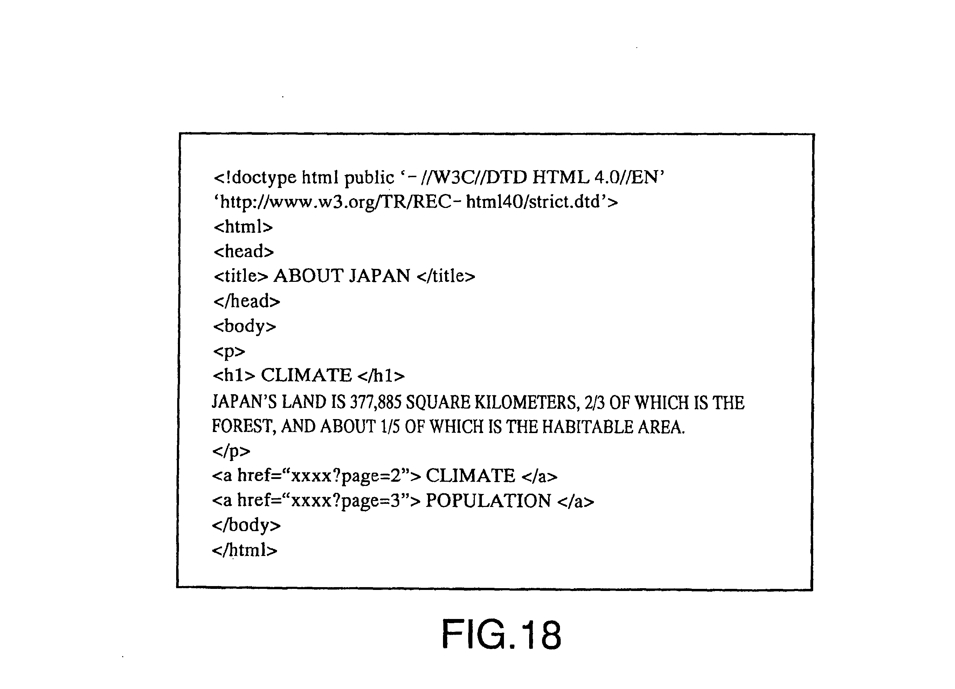

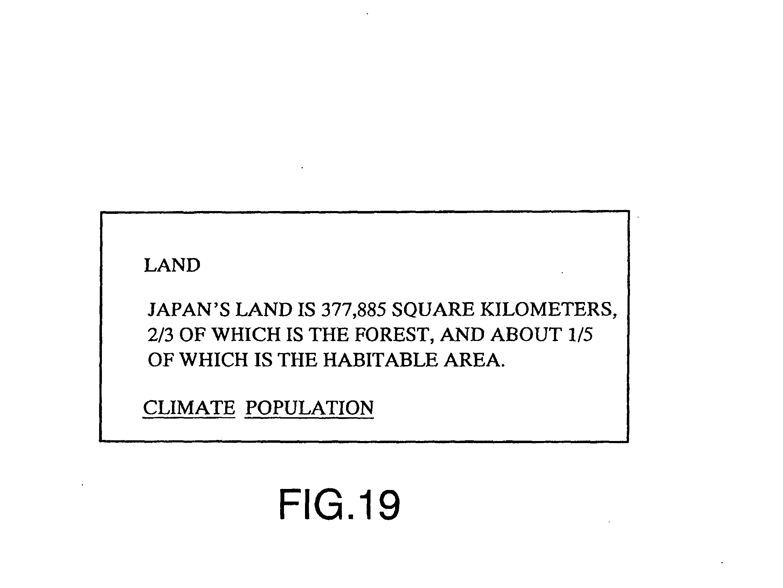

In the actual processing, web document generator 124 accesses content data 1101-1105 that correspond to the node id's described in specified document image 101 and, by replacing the comments shown by means of node id's in document image 102 with content data 1101-1105, generates the web document. FIG.18 shows an example of a generated web document. The web document shown in FIG.18 is a web document that can be displayed using browser 121 of terminal apparatus 120 and is smaller in document size than original web document 251 shown in FIG.4 for mobile terminals that are not suitable for display through operations such as scrolling. Now, FIG.19 shows a display example of the web document shown in FIG.18.

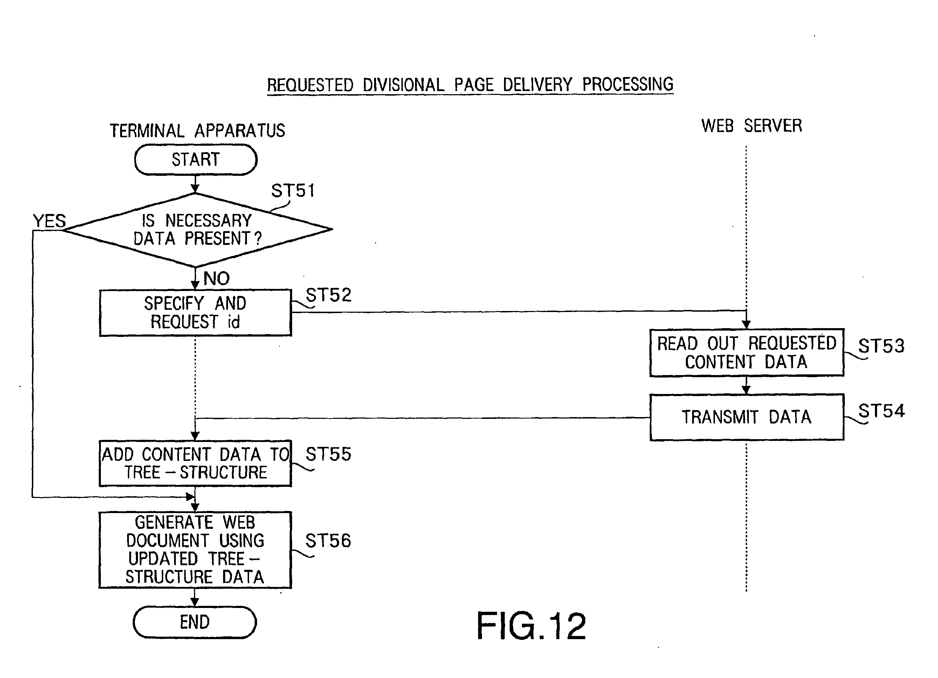

Next, the "delivery processing of requested divisional document pages" described in step ST 27 will be described in detail with reference to FIG.12.

First, web document generator 124 of terminal apparatus 120 accesses tree-structure data that corresponds to the node id's in a specified document image. Then, web document generator 124 checks on each node in the accessed tree-structure data as to whether all content data is held ( Step ST 51). That is to say, web document generator 124 decides as to whether there is in the tree-structure data all the content data that is needed for the specified document image.

Then, if in step ST 51 the tree-structure data carries all the content data that is needed, terminal apparatus 120 proceeds to step ST 56, which will be described later.

On the other hand, if in step ST 51 the tree-structure data does not hold all the content data that is needed, web document generator 124 requests web server 110 for the missing content data (Step ST 52). This request is realized through specification of content data id's.

For example, provided that the tree-structure data shown in FIG.17 is already held in memory 125, if then page number 2 (document image 102 of FIG.13) is to be displayed, the only missing data here is content data that corresponds to the id (p5) shown as 1106 in FIG.17. In this case, web document generator 124 requests content data that corresponds to the id (p5). In so doing, the request is made by specifying the node id with the data volume (len), which makes specification of content data clearer.

Meanwhile, web document divider 114 of web server 110 reads out from cache 115 content data that has the id that was requested in step ST 52 (Step ST 53), which is then transmitted to terminal apparatus 120 through divisional document transmitter 116 (Step ST 54). In this example, in step ST 54, content data 85 of FIG.15 alone is transmitted.

Meanwhile, tree-structure data updater 126 of terminal apparatus 120 receives the content data through divisional document receiver 127. Then, tree-structure data updater 126 adds the received content data to the tree-structure data in memory 125 (Step ST 55).

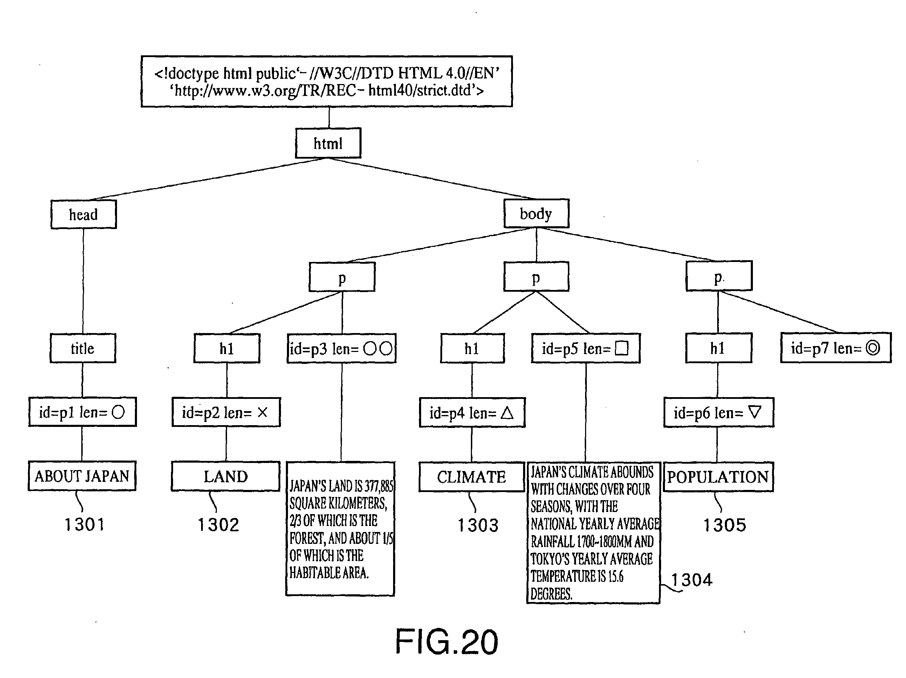

FIG.20 shows an example of tree-structure data updated in step ST 55. FIG.20 shows the tree-structure data of the page abstract shown in FIG.18, to which the divisional document data that terminal apparatus 120 acquired in step ST 55 (content data 85) is added.

As thus described, according to the present embodiment, by cumulatively adding content data to tree-structure data that is a page abstract, and by thus updating tree-structure data, it is possible to acquire from web server 110 minimum data that is needed upon displaying web documents. As a result, it is possible to reduce data to transmit.

Next, using the updated tree-structure data shown in FIG.20, web document generator 124 generates the web document shown in document image 102 of specified page number 2 (Step ST 56), which concludes the processing.

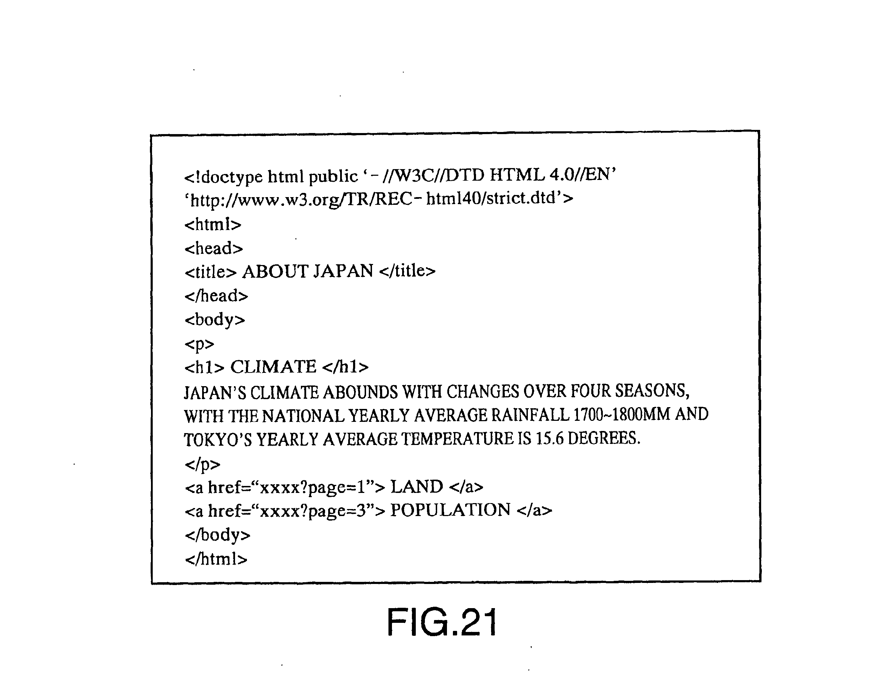

In the actual processing, web document generator 124 accesses content data 1301-1305 that correspond to the node id's described in specified document image 102 and, by replacing the comments shown by means of node id's in document. image 102 with content data 1301-1305, generates the web document. FIG. 21 shows an example of a generated web document. FIG.21 is a web document that can be displayed using browser 121 of terminal apparatus 120 for mobile terminals that are not suitable for display through operations such as scrolling.

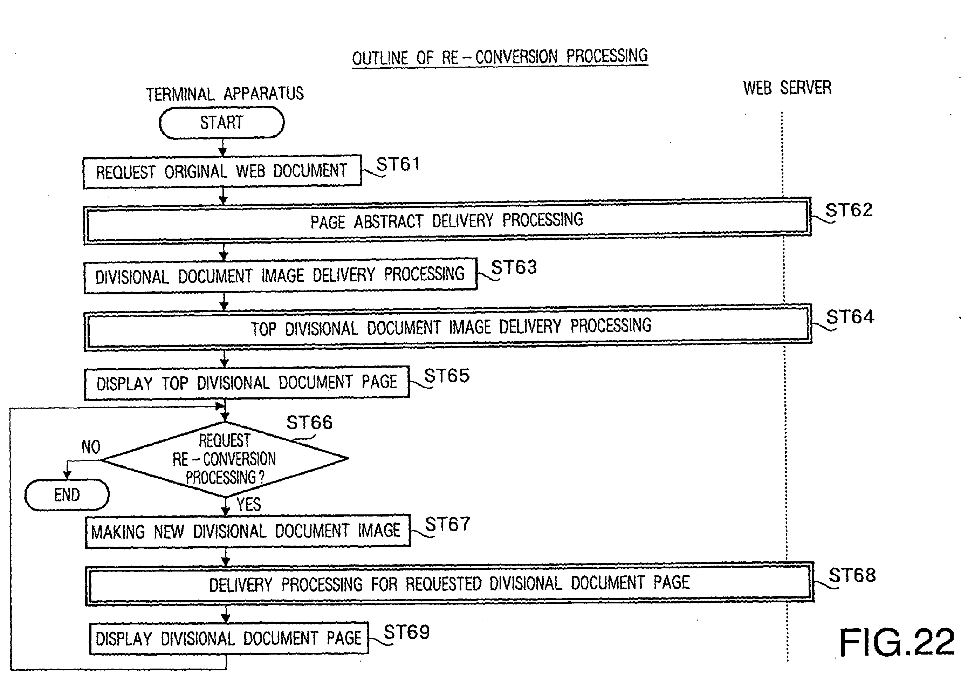

Next, the reconversion display operation by the web document delivery system will be described with reference to a system block diagram (FIG.8) and a flowchart (FIG.22).

First, web document delivery system 100 requests an original web document (Step ST 61), performs a delivery processing of an abstract page (Step ST 62), makes divisional document images (Step ST 63), performs a delivery processing of the top divisional page (StepST64), and thereafter displays the top divisional document page (Step ST 65). Incidentally, processings of step ST 61 through step ST 65 are identical with processings in step ST 21 through step ST 28 in the divisional display operation shown in FIG.9 under the present embodiment, and their detailed explanations will be omitted.

Next, web document generator 124 judges as to whether the user has requested a reconversion of the document in order to understand a summary of the document (Step ST 66). This request for document reconversion is realized when for instance the user selects a link that is provided in a web document.

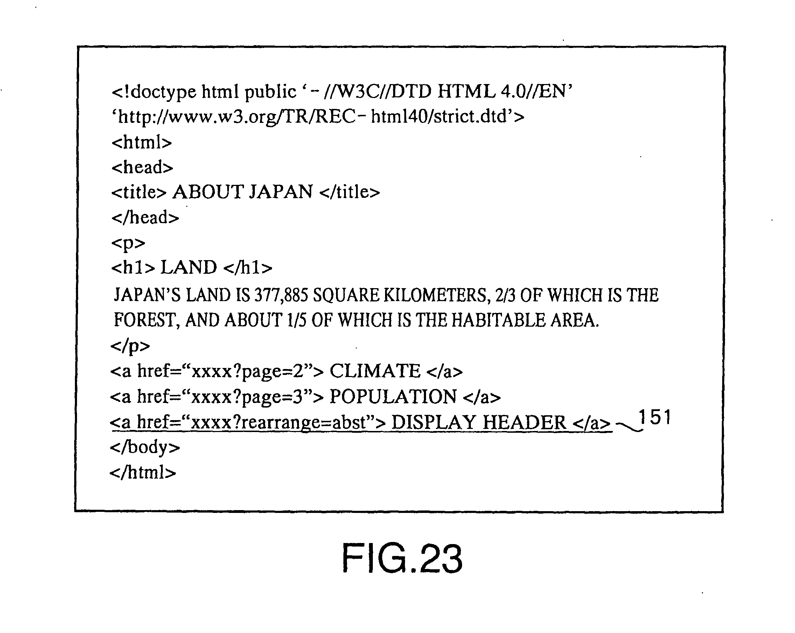

FIG.23 shows an example of a web document including a reconversion instruction. FIG.23 is virtually identical with the web document shown in FIG.18 and is a web document that can be displayed using browser 121 of terminal apparatus 120. The part shown as 151 in FIG.23 is for description of a link that instructs to implement document reconversion.

By choosing this link 151, the user is enabled to instruct web document generator 124 to request document reconversion.

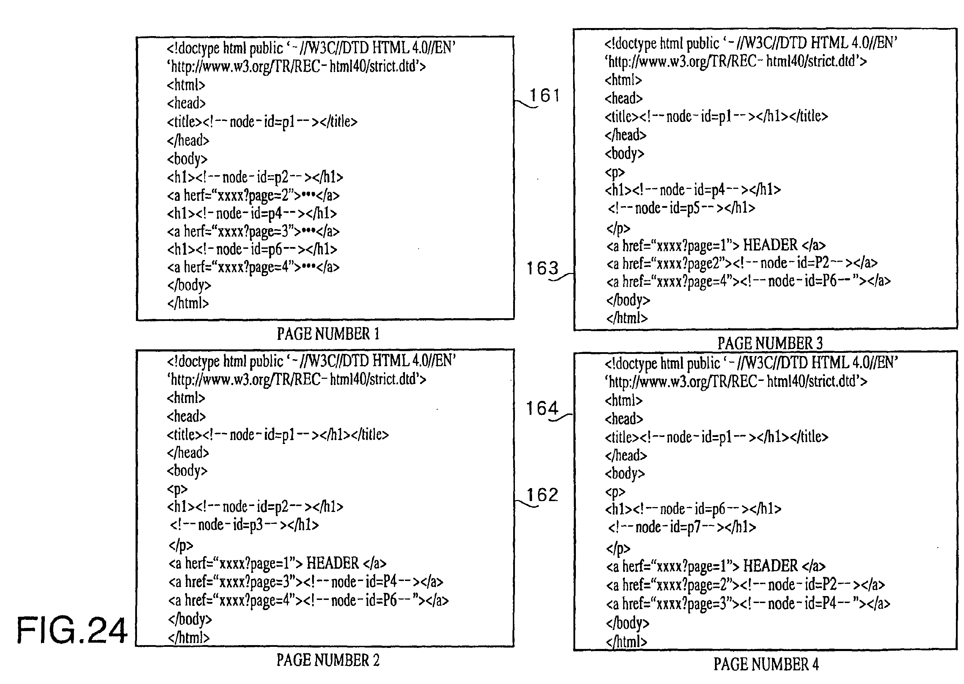

When in step ST 66 there is a request for document reconversion, web document generator 124 converts tree-structure data by using new conversion configurations and thus generates divisional document images (Step ST 67 ) . A case will be described here with the present embodiment where the making of document images involves generation of a header page. FIG.24 shows examples of a document image.

The examples of document images shown in FIG.24 are all a result of re-dividing (re-converting) page abstract 88 shown in FIG.15 and are composed of document 161 of page number 1 which indicates the header page, document 162 of page number 2 which is equivalent to document 101 of page number 1 in FIG.13, document 163 of page number 3 equivalent to document 102 of page number 2 in FIG.13, and document 164 of page number 4 equivalent to document 103 of page number 3 in FIG.13.

Next, similar to the divisional display operation under Embodiment 1 shown in FIG.9, the delivery processing of the requested divisional document pages takes place (Step ST 68) and then divisional document pages, which are a result of reconversion, are displayed (Step ST 69). The processings of step ST 68 and step ST 69 are identical with those in step ST 27 and step ST 28 in the divisional display operation shown in FIG.9 under the present embodiment, and their detailed explanations will be omitted.

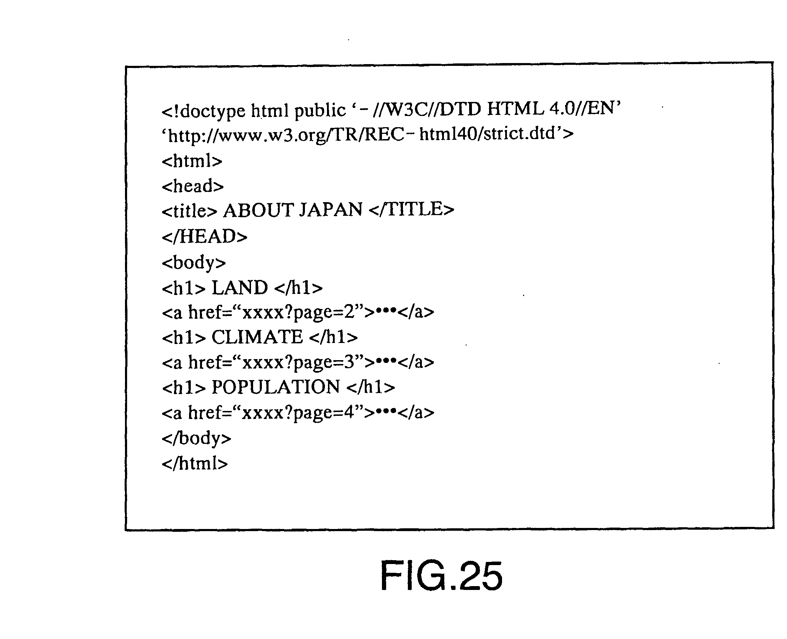

FIG.25 shows an example of the web document of page number 1 displayed in step ST 69. The web document shown in FIG.25 is made by assigning the divisional document data that terminal apparatus 120 acquired in step ST 68 to document image 161 in FIG.24 (content data 81-84, 86 in FIG.15).

As thus described, it is possible to display document data where the original web document has been re-converted. In this case again, terminal apparatus 120 is able to obtain from web server 110 content data that is needed for the re-converted document data alone, which reduces the communication load.

As described above, according to the present embodiment, when using a web document that is a structured document through division/re-conversion,terminal 120 is able to make a request to web server 110 to transmit only content data corresponding to "elemental contents" that terminal apparatus 120 needs. By this means, web server 110 is able to selectively transmit only portions of a web document that terminal apparatus 120 needs. As a result, transmission of unnecessary portions in the web document can be prevented, which then prevents transmission of unneeded portions as well as overlapping transmissions of these portions. Thus, it is possible to reduce redundancy upon delivery of web documents.

Inaddition, according to Embodiment 1, it is possible to transmit page abstract 88 from web server 110 to terminal apparatus 120. This page abstract 88 shows a web document summary by combination of content data that are document element data included in the web document requested from terminal apparatus 120. By this means, terminal apparatus 120 is able to recognize content data included in the requested web document by making reference to page abstract 88.

In addition, since content data that has been already sent from web server 110 and page abstract 88 are correlated and stored, terminal apparatus 120 is able to recognize, upon making a next web document request to web server 110, content data that is not stored in memory 125 from among content data included in the requested web document. As a result, terminal apparatus 120 is able to select and request to web server 110 the missing content data alone.

In addition, according to Embodiment 1, description of page abstract 88 by using identifiers that correspond to content data is possible. By this means, it is possible to reduce the data volume of page abstract 88. In addition, terminal apparatus 120 can request necessary content data by using identifiers. Thus, it is possible to reduce the data volume of a delivery request for content data from terminal apparatus 120 to web server 110. This as a result makes it possible to reduce the volume of communication between web server 110 and terminal apparatus 120.

Moreover, according to Embodiment 1, terminal apparatus 120 can store page abstract 88 as a tree-structure and furthermore correlate and store tree-structured page abstract 88 and content data of web documents. By this means, the updating processing of content data becomes easy, which makes the web document generation processing efficient.

Also, according to Embodiment 1, portions of a web documents that terminal apparatus 120 needs can be selectively transmitted by employing web documents described in a markup language for web page description as structural documents. As a result, reduction of redundancy becomes possible by way of preventing transmission of unnecessary portions.

Furthermore, it is possible to conf igure web document divider 114 of web server 110 with dedicated hardware or to make the processings of web document divider 114 into a program implemented by computers. In addition, it is possible to configure web document generator 124 of terminal apparatus 120 and tree-structure data updater 126 with dedicated hardware or to make the processings in web document generator 124 and tree-structure data updater 126 into a program implemented by computers.

Also, although Embodiment 1 is described in a form where terminal apparatus 120 requests document data from web server 110 on a 1-page basis, such configuration is also possible whereby terminal apparatus 120 first requests text data alone from web server 110 and then subsequently requests image data so as to exhibit a display composed of text data and image. In other words , any form suffices as long as terminal apparatus 120 cumulatively requests necessary content data from web server 110.

### (Embodiment 2)

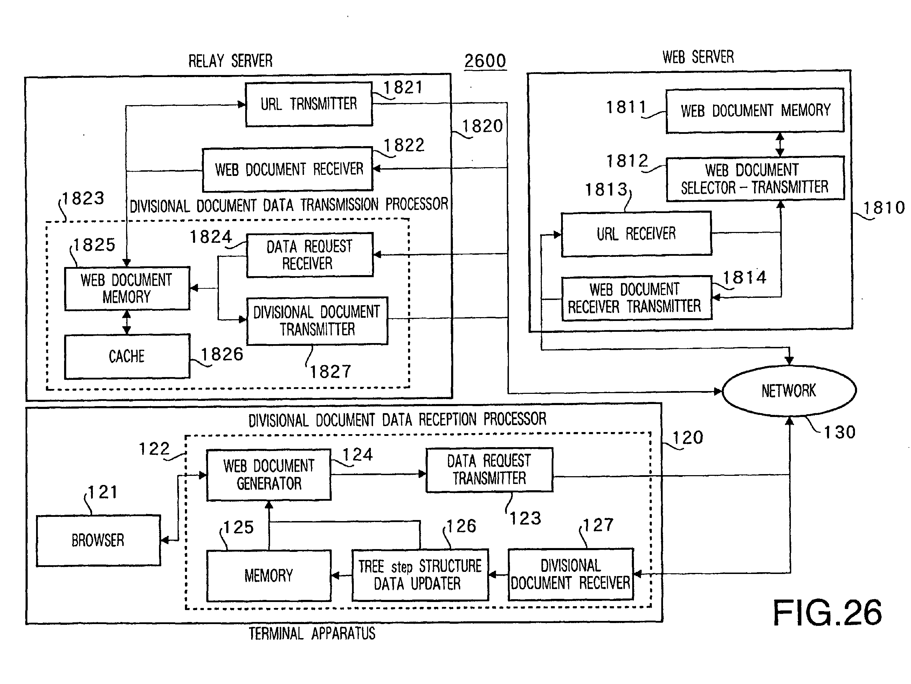

Next, the web document delivery system according to Embodiment 2 will be described with reference to FIG.26. FIG.26 is a configuration diagram of a web document delivery system according to Embodiment 2.

As shown in FIG.26, web document delivery system 2600 according to Embodiment 2 employs a configuration in which terminal apparatus 120, web server 1810, and relay server 1820 are connected via network 130.

Web server 1810 is connected to network 130 and composed of web document memory 1811 that memorizes an original web document, web document selection transmitter 1812 that selects and reads out the original web document of a URL requested from relay server 1820, URL receiver 1813 that receives a URL request transmitted from relay server 18 2 0 , and web document transmitter 1814 that transmits the original web document of the URL requested to relay server 1820.

In addition, relay server 1820 is a proxy server having relay functions. Relay server 1820 is connected to network 130 and composed of URL transmitter 1821 that transmits a requested URL to web server 1810, web document receiver 1822 that receives the original web document transmitted from web server 1810, and divisional document data transmission processor 1823.

In addition, divisional document data transmission processor 1823 is composed of data request receiver 1824 that receives a data request from terminal apparatus 120, web document divider 1825 as a structural document divider that reads out the web document specified by the above request from web server 1810 and makes divisional document data that stores a page abstract that shows a summary of the document with each elemental content, cache 1826 used as a temporary memory during the processing in web document divider 1825, and divisional document transmitter 1827 that transmits the page abstract and divisional document data to terminal apparatus 120.

Terminal apparatus 120 has a configuration identical to that of the terminal apparatus shown in Embodiment 1.

The operation of web document delivery system 2600 conf igured as above will be described. Description will be given separately for the divisional display operation and the re-conversion display operation.

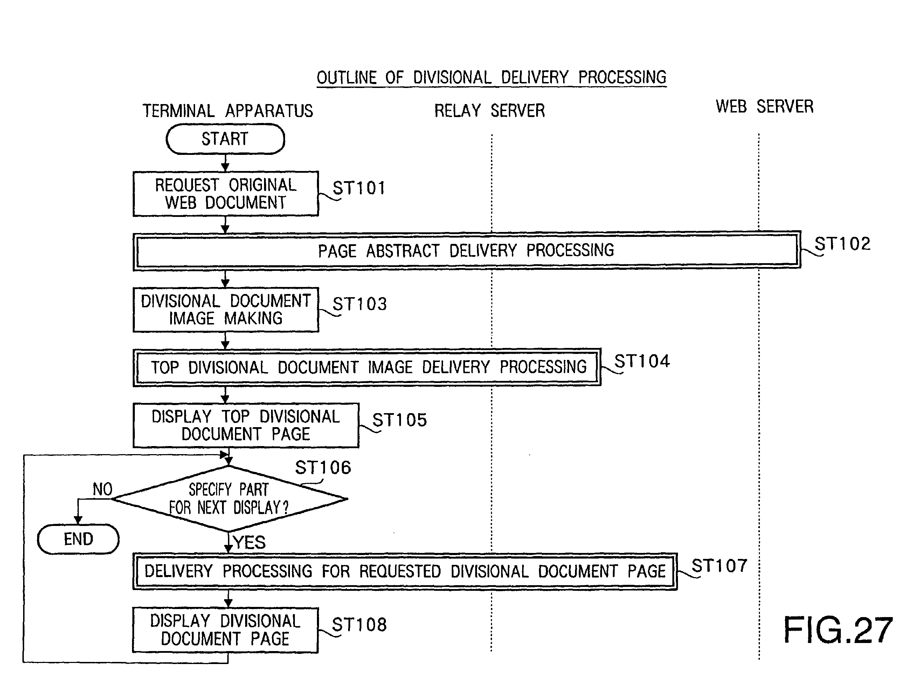

First, the divisional display operation by the web document delivery system will be described with reference to a system block diagram (FIG.26) and flowchart (FIG.27).

First, browser 121 of terminal apparatus 120 requests an original web document (Step ST 101). Next, upon request from terminal apparatus 120, relay server 1820 acquires the original web document fromweb server 1810, makes a page abstract thereof, and delivers the abstract to terminal apparatus 120 (Step ST 102). The detailed steps of this step ST 102 will be explained later.

Subsequent processings step ST 103 through step ST 108 are identical with step ST 24 through step ST 28 in the divisional display operation under Embodiment 1, and their detailed explanations will be omitted.

By the above processings, it is possible to reduce redundancy upon delivery of web documents in the divisional display operation by a web document delivery system using a relay server.

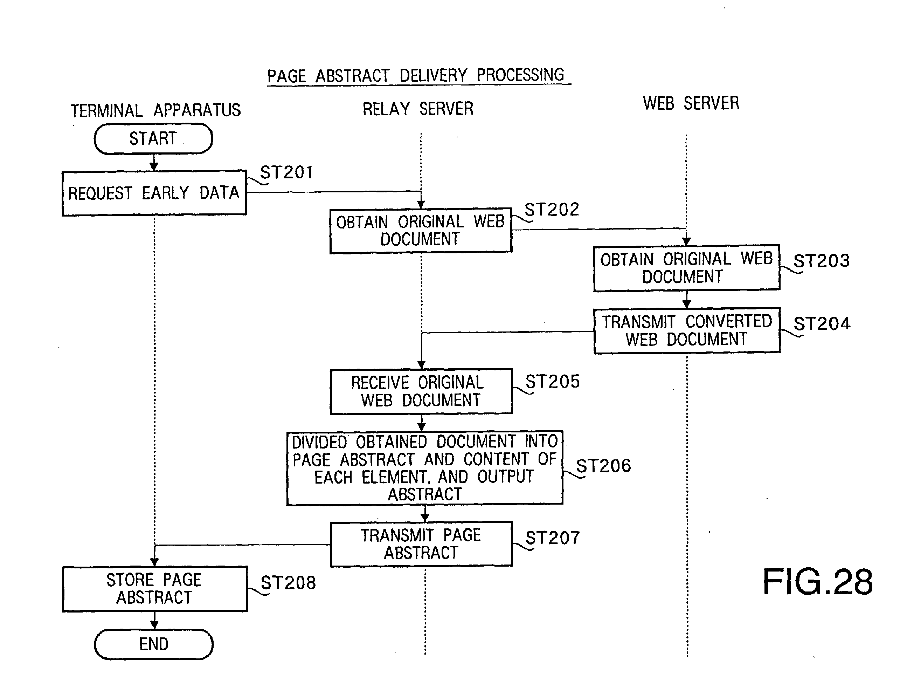

The "delivery processing of a page abstract" shown in step ST 102 will be described in detail using FIG.28.

First, upon receiving a request from browser 121, web document generator 124 of terminal apparatus 120 confirms that there is no tree-structure data relating to a specified URL in memory 125 and requests a page abstract of the specified URL to relay server 1820 (Step ST 201).

Web document divider 1825 of relay server 1820 receives this request through data request receiver 1824 and, through URL transmitter 1821, requests web server 1810 for the original web document indicated by the URL (Step ST 202). Next, web document selection transmitter 1812 of web server 1810 receives this request through URL receiver 1813 and extracts the original web document indicated by the URL of request from web document memory 1811 (Step ST 203). Web document selection transmitter 1812 transmits this original web document to relay server 1820 through web document transmitter 1814 (Step ST 204).

Then, web document divider 1825 of relay server 1820 receives this original web document through web document receiver 1822 and stores the received document in cache 1826 (Step ST 205).

Subsequent processings step ST 206 through step ST 208 are identical with step ST 33 through step ST 35 in the "delivery processing of a page abstract" in the divisional display operation under Embodiment 1, and their detailed explanations will be omitted.

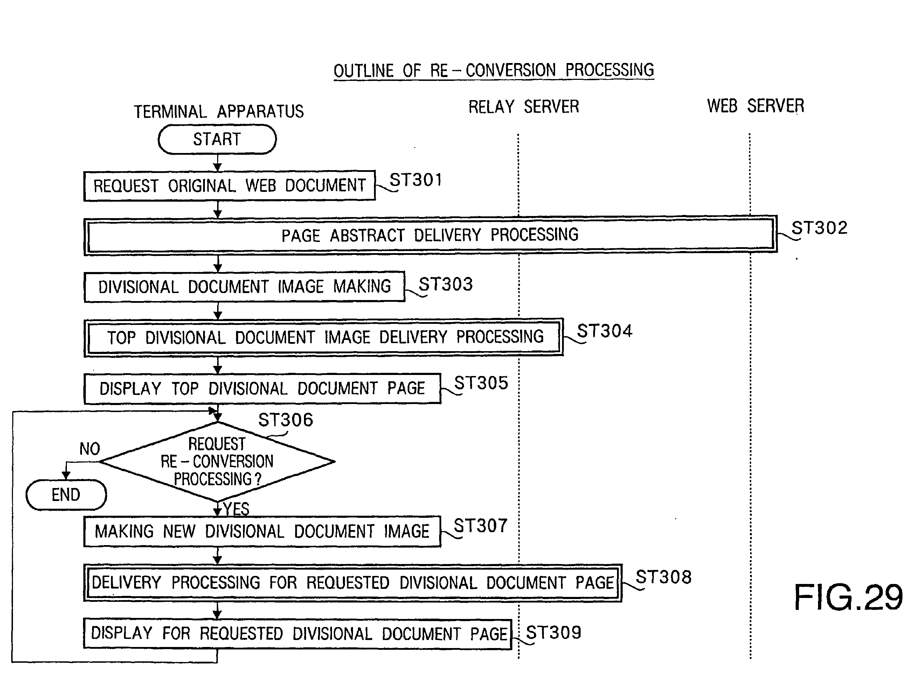

Next, the reconversion display operation by a web document delivery system according to Embodiment 2 will be described with reference to a system block diagram (FIG.26) and flowchart (FIG.29).

First, similar to the divisional display operation, an original web document is requested (Step ST 301), an abstract page delivery processing is performed (Step ST 302), divisional document images are made (Step ST 303), a delivery processing of the top divisional page is performed (Step ST 304), and thereafter the top divisional document page is displayed (Step ST 305). Incidentally, processings of step ST 301 through step ST 305 are identical to those of step ST 101 through step ST 105 in the divisional display operation shown in FIG.27.

Subsequent processings step ST 306 through step ST 309 are identical with step ST 66 through step ST 69 in the reconversion display operation shown in FIG. 22 under Embodiment 1, and their detailed explanations will be omitted.

By combination of the above-described processings, also in the re-conversion display operation using relay server 1820, it is possible to reduce redundancy upon delivery of web documents.

As thus described, according to Embodiment 2, it is possible to reduce redundancy upon delivery of web documents through the use of division/conversion in web document delivery system 2600 using relay server 1820.

The present specification is based on Japanese Patent Application No.2001-113698 filed on April 12, 2001, and Japanese Patent Application No. 2002-96360 filed on March 29, 2002, entire content of which is expressly incorporated herein for reference.

### Industrial Applicability

As described above, according to the present invention, an advantageous effect of redundancy reduction upon communication of web documents through conversion is achieved, by way of transmitting from the server side only content data that is necessary to display a structural document, and by converting this content data into a usable structural document on the terminal side.

## Claims

1. A structural document data processing apparatus, comprising:
a document data request receiving section that receives from a terminal apparatus through a network a delivery request for a structural document;
an abstract generating section that generates an abstract showing a summary of said structural document that corresponds to said delivery request by combination of content data being elements contained in said structural document;
an abstract transmitting section that transmits the abstract to said terminal apparatus;
a content data request receiving section that receives a delivery request for content data from said terminal apparatus;
a content data extracting section that extracts from said structural document content data that corresponds to said delivery request for said content data; and
a content data transmitting section that delivers said content data extracted by said content data extracting section to said terminal apparatus.

2. The structural document delivery apparatus according to claim 1, wherein said abstract generating section correlates said content data with a unique identifier and generates said abstract by using said identifier.

3. The structural document delivery apparatus according to claim 1, wherein said structural document is a document described in a markup language for web page description.

4. The structural document delivery apparatus according to claim 1, wherein said structural document delivery apparatus acquires said structural document from a network apparatus other than said terminal apparatus connected to said network.

5. The structural document delivery apparatus according to claim 2, wherein said content data request receiving section receives said identifier as said delivery request for content data, and said content data extracting section extracts from said structural document content data that corresponds to said identifier.

6. A terminal apparatus, comprising:
a document data request transmitting section that makes a delivery request for a structural document to a structural document delivery apparatus that delivers said structural document through a network;
an abstract receiving section that receives from said structural document delivery apparatus an abstract showing a summary of said structural document that corresponds to said delivery request from said structural document delivery apparatus by combination of content data being elements contained in said structural document;
a content data selection section that selects necessary content data with reference to said abstract;
a content data transmitting section that requests the selected content data;
a content data receiving section that receives the requested content data; and
a content data storage section that stores the received content data and said abstract in correspondence.

7. The terminal apparatus according to claim 6, wherein said content data selecting section does not choose content data that is already stored in said content data storage section as said necessary content data.

8. The terminal apparatus according to claim 6, wherein said content data storage section makes the abstract into a tree-structure, and correlates and stores said content data with the tree-structured abstract.

9. The terminal apparatus according to claim 6, wherein:
said abstract receiving section receives said abstract that is described using an identifier corresponding to said content data;
said content data selecting section selects an identifier that corresponds to said necessary content data; and
said content data request transmitting section transmits the selected identifier.

10. The terminal apparatus according to claim 6, wherein said structural document is described in a markup language for web page description.

11. A structural document delivery system wherein the structural document delivery apparatus of claim 1 and the terminal apparatus of claim 6 are connected by a network.

12. A structural document delivery method, wherein:
when a delivery request for a structural document is receivedfrom a terminal apparatus through a network,generating an abstract showing a summary of said structural document that corresponds to said delivery request by combination of content data being elements contained in said structural document;
transmitting the abstract to said terminal apparatus;
when a delivery request for said content data is received from said terminal apparatus, extracting said content data corresponding to said delivery request for content data from said structural document; and
transmitting the extracted content data to said terminal apparatus.

13. A document data request method, wherein
making a delivery request for a structural document to a structural document delivery apparatus that delivers said structural document through a network;
receiving an abstract showing a summary of said structural document that corresponds to said delivery request by combination of content data being elements contained in said structural document;
selecting necessary content data with reference to the abstract; and
requesting a transmission of the selected content data.

14. A structural document delivery method, wherein
a terminal apparatus makes a delivery request for a structural document to a structural document delivery apparatus that delivers said structural document data through a network;
said structural document delivery apparatus transmits to said terminal apparatus an abstract showing a summary of said structural document that corresponds to said delivery request by combination of content data being elements contained in said structural document;
said terminal apparatusselects necessary content data with reference to the abstract sent thereto and makes a delivery request to said structural document delivery apparatus for said necessary content data; and
said structural document delivery apparatus extracts said necessary content data requested from said terminal apparatus from said structural document and delivers the extracted necessary content data to said terminal apparatus.

15. A program, whereby a computer will:
upon receiving a delivery request for a structural document from a terminal apparatus through a network, generate an abstract showing a summary of said structural document that corresponds to said delivery request by combination of content data being elements contained in said structural document;
transmit the abstract to said terminal apparatus;
upon receiving said delivery request for content data from said terminal apparatus, extract from said structural document content data that corresponds to said delivery request for content data; and
deliver the extracted content data to said terminal apparatus.

16. A program, whereby a computer will:
make a delivery request for said structural document to a structural document delivery apparatus that delivers said structural document through a network;
receive an abstract showing a summary of said structural document that corresponds to said delivery request by combination of content data being elements contained in said structural document corresponding to said delivery request;
select necessary content data with reference to the abstract; and
make a request for a transmission of the selected content data.

## Amended claims

### Amended claims under Art. 19.1 PCT

**1.** (Amended) A structural document delivery apparatus, comprising:
a document data request receiving section that receives from a terminal apparatus through a network a delivery request for a structural document composed of a plurality of elements and content data of said elements;
an abstract generating section that generates an abstract in which said content data included in said structural document corresponding to said delivery request is correlated with a unique identifier to show a structure of said structural document;
an abstract transmitting section that transmits the abstract to said terminal apparatus;
an identifier receiving section that receives an identifier transmitted from said terminal apparatus;
a content data extracting section that extracts from said structural document content data that corresponds to the received identifier; and
a content data transmitting section that delivers the extracted content data to said terminal apparatus.

**2.** (Cancelled)

**3.** The structural document delivery apparatus according to claim 1, wherein said structural document is a document described in a markup language for web page description.

**4.** The structural document delivery apparatus according to claim 1, wherein said structural document delivery apparatus acquires said structural document from a network apparatus other than said terminal apparatus connected to said network.

**5.** (Cancelled)

**6.** (Amended) A terminal apparatus, comprising:
a document data request transmitting section that makes a delivery request through a network for a structural document composed of a plurality of elements and content data of said elements to a structural document delivery apparatus that delivers said structural document;
an abstract receiving section that receives an abstract in which said content data included in said structural document transmitted from said structural document delivery apparatus in response to said delivery request is correlated with a unique identifier to show a structure of said structural document;
an identifier transmitting section that selects and transmit to said structural document delivery apparatus an identifier that corresponds to necessary content data by making reference to said abstract;
a content data receiving section that receives content data corresponding to the transmitted identifier and transmitted from said structural document delivery apparatus; and
a content data storage section that correlates and stores the received content data and said abstract.

**7.** (Amended) The terminal apparatus according to claim 6, wherein said identifier transmitting section does not choose an identifier corresponding to content data already stored in said content data storage section.

**8.** The terminal apparatus according to claim 6, wherein said content data storage section makes the abstract into a tree-structure, and correlates and stores said content data with the tree-structured abstract.

**9.** (Cancelled)

**10.** The terminal apparatus according to claim 6, wherein said structural document is a document described in a markup language for web page description.

**11.** A structural document delivery system wherein the structural document delivery apparatus of claim 1 and the terminal apparatus of claim 6 are connected by a network.

**12.** (Amended) A structural document delivery method, comprising:
receiving from a terminal apparatus through a network a delivery request for a structural document composed of a plurality of elements and content data of said elements;
generating and transmitting to said terminal apparatus an abstract in which said content data in the structural document corresponding to said delivery request is correlated with a unique identifier to show a structure of said structural document;
receiving an identif ier transmitted from said terminal apparatus;
extracting from said structural document content data that corresponds to the received identifier; and
delivering the extracted content data to said terminal apparatus.

**13.** (Amended) A structural document request method, comprising:
making a delivery request through a network for a structural document composed of a plurality of elements and content data of said elements to a structural document delivery apparatus that delivers said structural document;
receiving an abstract in which said content data included in said structural document transmitted from said structural document delivery apparatus in response to said delivery request is correlated with a unique identifier to show a structure of said structural document;
selecting and transmitting to said structural document delivery apparatus an identifier that corresponds to necessary content data by making reference to said abstract; and
receiving content data corresponding to the transmitted identifier and transmitted from said structural document delivery apparatus.

**14.** (Amended) A structural document delivery method, comprising:
making a delivery request through a network for a structural document composed of a plurality of elements and content data of said elements to a structural document delivery apparatus that delivers said structural document;
transmitting to a terminal apparatus an abstract in which said content data in the structural document corresponding to said delivery request is correlated with a unique identifier to show a structure of said structural document; wherein
said terminal apparatus transmits to said structural document delivery apparatus an identifier corresponding to necessary content data by making reference to the transmitted abstract; and
said structural document delivery apparatus extracts from said structural document and transmits to said terminal apparatus content data corresponding to the identifier transmitted from said terminal apparatus.

**15.** (Amended) A program whereby a computer will:
receive from a terminal apparatus through a network a delivery request for a structural document composed of a plurality of elements and content data of said plurality of elements;
generate and transmit to said terminal apparatus an abstract in which said content data in the structural document corresponding to said delivery request is correlated with a unique identifier to show a structure of said structural document;
receive the identifier transmitted from the terminal apparatus;
extract from said structural document content data that corresponds to the received identifier; and
deliver the extracted content data to said terminal apparatus.

**16.** (Amended) A program whereby a computer will:
make a delivery request through a network for a structural document composed of a plurality of elements and content data of said elements to a structural document delivery apparatus that delivers said structural document;
receive an abstract in which said content data included in said structural document transmitted from said structural document delivery apparatus in response to said delivery request is correlated with a unique identifier to show a structure of said structural document;
select and transmit to said structural document delivery apparatus an identifier that corresponds to necessary content data by making reference to said abstract; and
receive content data corresponding to the transmitted identifier and transmitted from said structural document delivery apparatus.

Statement under Art. 19.1 PCT
Claims 1, 6, 12, 13, 14, 15, and 16 further clarify that a structural document delivery apparatus transmits an abstract of a structural document to a terminal apparatus, and correspondingly, the terminal apparatus recognizes the structure of the structural document from the abstract, selects identifiers that correspond to needed content data, transmits the selected identifiers to the structural document delivery apparatus, and thus makes a delivery request for needed content data.

By this means, without sending the entire structural document, the structural document delivery apparatus is able to send only content data that the terminal apparatus needs. As a result of this, transmission of unnecessary content data can be prevented, which then realizes reduction of redundancy upon delivery of structural documents.

The cited reference (JP2000-76473A) displays a web document using the abstract syntax tree, and, analyzing the web document through use of the abstract structure tree, applies various modifications to the elements of the web document.
